Europäisches Patentamt

European Patent Office

Office européen des brevets

(11) Numéro de publication: **0 277 594 B1**

## (12) FASCICULE DE BREVET EUROPEEN

(45) Date de publication de fascicule du brevet: **08.04.92**　(51) Int. Cl.⁵: **G21C 7/36**, G21D 3/10

(21) Numéro de dépôt: **88101234.8**

(22) Date de dépôt: **28.01.88**

(54) **Procédé de détermination du seuil d'alarme du rapport d'échauffement critique et dispositif de mise en oeuvre de ce procédé.**

(30) Priorité: **30.01.87 FR 8701162**

(43) Date de publication de la demande:
**10.08.88 Bulletin 88/32**

(45) Mention de la délivrance du brevet:
**08.04.92 Bulletin 92/15**

(84) Etats contractants désignés:
**BE CH DE ES GB LI SE**

(56) Documents cités:
**EP-A- 0 100 640**
**EP-A- 0 188 918**
**FR-A- 2 399 922**

**SIEMENS-ZEITSCHRIFT, vol. 49, no. 10, octobre 1975, pages 652-657; H.-W. BOCK et al.: "Reaktorleistungsregelung mit Doppel-Prozessrechner 305 im Kernkraftwerk Stade"**

(73) Titulaire: **FRAMATOME**
**Tour Fiat 1, Place de la Coupole**
**F-92400 Courbevoie(FR)**

(72) Inventeur: **Foret, François**
**50bis, rue du 22 Septembre**
**F-92400 Courbevoie(FR)**

(74) Mandataire: **Weinmiller, Jürgen et al**
**Lennéstrasse 9 Postfach 24**
**W-8133 Feldafing(DE)**

# Description

La présente invention concerne le pilotage d'un réacteur nucléaire. Elle s'applique aux réacteurs à fission à eau préssurisée dont le pilotage et la régulation sont assurés à l'aide de familles différenciées de barres de contrôle.

Un tel réacteur comporte les éléments connus suivants :

- Un coeur contenant des éléments combustibles réactifs pour alimenter une réaction de fission nucléaire qui crée un flux neutronique dans le volume de ce coeur, qui est elle-même provoquée dans chaque zone de ce volume par le flux neutronique régnant dans cette zone, et qui dégage sous forme thermique une puissance nucléaire variant avec ce flux.
- Un circuit de fluide caloporteur dont une branche passe par ce coeur pour évacuer cette puissance et permettre son utilisation dans une charge variable à l'extérieur du réacteur.
- Des moyens de mesure notamment de températures de ce fluide pour fournir d'une part un rapport d'échauffement critique représentant le rapport d'un flux de chaleur critique prédéterminé qui serait gravement dommageable en quelque point du coeur qu'il apparaisse, à un flux de chaleur local actuel en un point chaud où ce flux est maximal, et pour fournir d'autre part une température moyenne de fluide caloporteur qui doit être voisine d'une valeur normale pour permettre un fonctionnement optimal de la centrale.
- Et des barres de contrôle munies de moyens de déplacement et de moyens de commande pour insérer et extraire longitudinalement ces barres dans des zones correspondantes de ce coeur et pour commander ainsi leurs positions, la position d'une barre étant définie par son pourcentage d'extraction.

Chacune de ces barres comporte un matériau absorbeur de neutrons réparti sur sa longueur et lui conférant une antiréactivité qui diminue ledit flux neutronique et ladite puissance nucléaire dans la zone correspondante du coeur sur la profondeur sur laquelle la barre est insérée. Les déplacements de ces barres permettent de faire varier la puissance nucléaire du coeur mais ceci au prix de distorsions qui apparaissent dans la répartition du flux neutronique et qui s'accompagnent d'une usure supplémentaire de coeur.

Une famille de ces barres de contrôle est constituée de barres de pilotage qui peuvent être déplacées lors d'opérations de pilotage normal sur une grande profondeur pour faire suivre par la puissance nucléaire les variations importantes qui affectent relativement rarement ladite charge extérieure.

Une autre famille de barres de contrôle est constituée par des barres de régulation. Lesdits moyens de commande reçoivent ladite température moyenne de fluide caloporteur et diminuent ou augmentent le pourcentage d'extraction de ces barres de régulation selon que cette température est supérieure ou inférieure à sadite valeur normale, respectivement, de manière à réaliser une boucle de régulation qui maintient automatiquement cette température moyenne au voisinage de cette valeur normale en faisant suivre par la puissance nucléaire les petites variations qui affectent fréquemment ladite charge extérieure et qui feraient varier cette température si la puissance nucléaire était constante. En service normal ces moyens de commande limitent cependant le déplacement de ces barres de régulation à l'intérieur d'un domaine de régulation qui est défini entre deux pourcentages d'extraction élevés, de manière à limiter l'usure de coeur en limitant l'amplitude des distorsions que les déplacements de ces barres imposent fréquemment au flux neutronique.

Un procédé connu de pilotage d'un tel réacteur décrit dans FR-A-2 349 922 comporte non seulement un déplacement des barres de pilotage lors des dites opérations de pilotage normal pour faire suivre par la puissance nucléaire les variations importantes de la charge extérieure, mais aussi une insertion éventuellement supplémentaire de ces barres lors d'une opération de diminution de puissance sur alarme qui est effectuée dès que ledit rapport d'échauffement critique descent au dessous d'un seuil d'alarme bas. Cette insertion a pour but de faire remonter ce rapport au moins jusqu'à ce seuil, ce seuil étant déterminé avec une marge de sécurité telle au-dessus de l'unité que, tant qu'il est atteint, ledit échauffement critique ne puisse être approché de manière dommageable même au cas où certains accidents préétudiés se produiraient.

Dans ce procédé connu le seuil d'alarme bas du rapport d'échauffement critique est fixé à 2,17. Or des fluctuations relativement brèves et peu évitables apparaissent de temps à autre dans le fonctionnement du réacteur. Elles obligent l'opérateur de la centrale à diminuer trop souvent la puissance du réacteur par insertion des barres de pilotage pour ramener ce rapport au dessus du seuil, alors même que la température moyenne du fluide caloporteur permettrait un fonctionnement à puissance plus élevée. Il en résulte une diminution de la puissance susceptible d'être fournie à la charge extérieure. Celle-ci est le plus souvent un groupe turbine alternateur alimentant un réseau de distribution d'énergie électrique. De telles diminution de puissance se traduisent finalement par une atteinte sensible à la disponibilité de la centrale pour la satisfaction des besoins en énergie électrique.

La présenté invention a notamment pour but d'abaisser de manière simple et économique le nombre des diminutions de puissance qui sont provoquées par des fluctuations affectant le rapport d'échauffement critique et ceci sans compromettre la sécurité vis à vis du risque d'échauffement local critique dans le coeur du réacteur.

Elle a en même temps pour but d'augmenter la disponibilité, la rentabilité, et la puissance moyenne de la centrale nucléaire.

Le procéde de pilotage selon l'invention est caractérisé par le fait que ledit seuil d'alarme bas du rapport d'échauffement critique est une fonction généralement décroissante (B) du pourcentage d'extraction desdites barres de régulation. On choisit des valeurs différentes pour ledit seuil d'alarme bas du rapport d'échauffement critique lorsque lesdites barres de régulation sont dans des positions différentes au sein dudit domaine de régulation . Une valeur relativement haute est choisie lorsque le pourcentage d'extraction de ces barres est relativement bas. Une valeur relativement basse est au contraire choisie lorsque ce pourcentage est relativement haut. Elle évite une diminution de la puissance nucléaire et donc de la puissance susceptible d'être fournie à ladite charge extérieure quand le rapport d'échauffement critique descend entre ces deux valeurs de seuil alors que la position des barres de régulation est telle que cette diminution n'est pas nécessaire. Il s'agit plus précisément d'une position telle que, au cas où un dit accident préétudié se produirait, un déplacement convenable de ces barres à l'intérieur dudit domaine de régulation éviterait tout risque que ledit échauffement critique soit approché de ladite manière dommageable.

La détermination du seuil d'alarme bas conformément à l'invention se fait de préférence de manière automatique au sein d'un dispositif d'aide au pilotage. Un circuit de ce dernier reçoit l'information constituée par le pourcentage d'extraction des barres de régulation, et il fournit en permanence à l'opérateur de la centrale la valeur du seuil d'alarme bas qu'il détermine sous la forme d'une fonction prédéterminée et généralement décroissante de ce pourcentage.

La présente invention a également pour objets ce dispositif et le procédé de détermination qui y est mis en oeuvre.

A l'aide des figures schématiques ci-jointes on va décrire plus particulièrement ci-après, à titre d'exemple non limitatif, comment la présente invention peut-être mise en oeuvre dans le cadre de l'exposé qui en a été donné ci-dessus. Lorsqu'un même élément est représenté sur plusieurs figures il y est désigné par le même signal de référence.

La figure 1 représente une vue en coupe axiale d'un élément combustible au contact de l'eau qui constitue le fluide caloporteur au sein du coeur d'un réacteur nucléaire à eau sous pression, à l'approche d'un échauffement critique.

La figure 2 représente une vue analogue du même élément en présence d'un échauffement critique.

La figure 3 représente des diagrammes des valeurs du seuil d'alarme bas et du seuil d'arrêt d'urgence du rapport d'échauffement critique dans le même réacteur selon un procédé connu, en fonction du pourcentage d'extraction des barres de régulation.

La figure 4 représent un diagramme des valeurs de ces mêmes seuils selon l'invention.

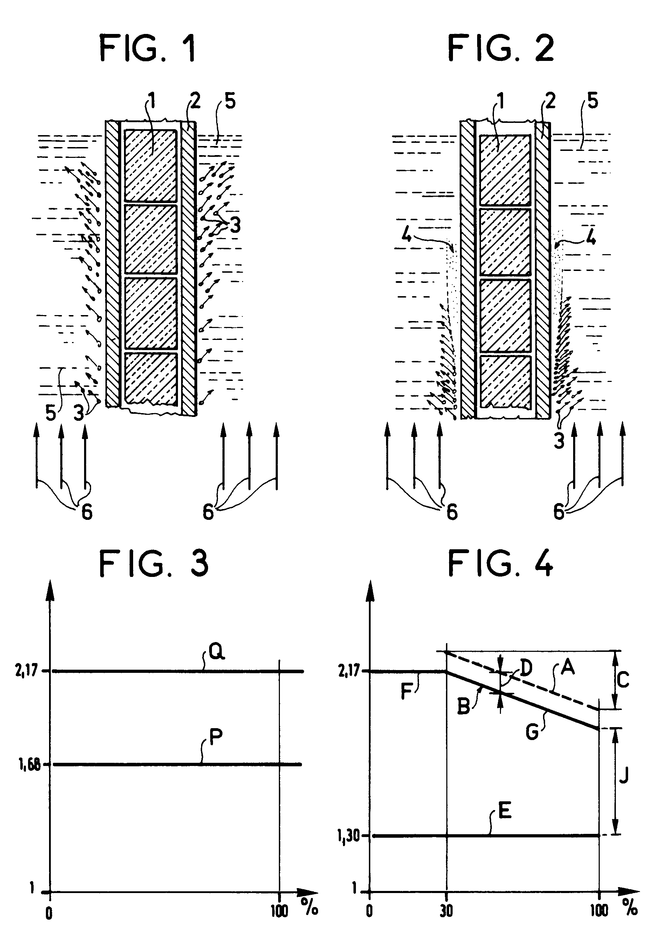

Comme précédemment indiqué le rapport d'échauffement critique est le rapport d'un flux de chaleur critique au flux de chaleur local au point chaud. Ce flux de chaleur critique est celui qui fait passer ledit fluide caloporteur, c'est-à-dire l'eau qui circule au sein du circuit primaire et qui constitue le fluide de refroidissement primaire, du début de l'ébullition à l'ébullition complète et à la formation d'un film de vapeur. Sur les figures 1 et 2 on a représenté par des flèches telles que 6 le sens de déplacement de cette eau 5 au contact de gaines de protection telles que 2. Ces gaines sont constituées d'un alliage de zirconium. Elles contiennent des crayons tels que 1 qui constituent les éléments combustibles.

Le phénomène d'échauffement à considérer apparaît autour d'un ou plusieurs de ces crayons. Il est caractérisé par la formation de bulles de vapeur 3 autour de la gaine 2 d'un crayon 1, conformément à la figure 1. Si l'échauffement continue, la formation des bulles de vapeur 3 s'accélère pour former, conformément à la figure 2, un film de vapeur 4 qui isole tout ou partie de la gaine du liquide de refroidissement 5 et diminue l'effet d'échange thermique. Ce phénomène est associé à une élévation de la température moyenne de fluide primaire. Il est dangereux car la gaine insuffisament refroidie risque d'atteindre des températures supérieures à 800° C qui entraînent sa fragilisation.

C'est dire que, si le flux de chaleur atteint la valeur critique, cela peut entraîner des dommages très graves pour le coeur du réacteur tels qu'une fusion partielle ou totale de celui-ci. Il est donc impératif d'avoir une bonne connaissance de ce rapport d'échauffement critique.

La valeur du flux de chaleur critique est déterminée par le calcul en fonction de la pression dans le réacteur, du débit du fluide primaire, et de l'état thermodynamique de système.

Le flux de chaleur local au point chaud est déterminé à partir des valeurs locales de la température, ces valeurs étant elles-mêmes déterminées à partir de la température des branches chaude et froide du circuit primaire, de la pression dans ce circuit, de la puissance nucléaire mesurée par des chambres de mesure disposées hors du coeur, et de la position des barres de contrôle.

Le problème est d'assurer la sécurité, c'est-à-dire d'éviter tout risque de détérioration des gaines du combustible, tout en diminuant le moins souvent possible la puissance du réacteur notamment lorsque la puissance présente des valeurs élevées.

Plus précisément, quand on construit et pilote un réacteur nucléaire on fait en sorte que le rapport d'échauffement critique ne soit en aucun cas inférieur à une première valeur prédéterminée supérieure à un qui constitue un seuil d'arrêt d'urgence. Ce seuil est la limite basse au dessous de laquelle le coeur du réacteur a de forts risques d'être endommagé.

Une seconde valeur prédéterminée, supérieure à la première, est un seuil d'alarme bas au dessus duquel le rapport d'échauffement critique doit être rapidement ramené après un franchissement éventuel.

Si ce rapport est inférieur à cette seconde valeur l'opérateur de conduite du réacteur doit agir sur divers paramètres de façon à faire remonter ce rapport au dessus de cette seconde valeur. Cette valeur est déterminée de façon à assurer une marge de sécurité suffisante au cas où se produirait un accident tel que ceux indiqués ci-dessous :

- La chute accidentelle d'une ou plusieurs des grappes qui sont constituées chacune par l'assemblage de plusieurs barres de contrôle, ces grappes étant des grappes de pilotage ou de régulation selon les barres dont elles sont constituées.
- Le retrait total d'une telle grappe de contrôle.
- La rupture d'une tuyauterie de vapeur.

De tels accidents constituent les accidents préétudiés précédemment mentionnés. Ils peuvent provoquer une diminution de la valeur du rapport d'échauffement critique. Les risques associés à cette diminution sont fonctions de l'antiréactivité des grappes qui sont présentes dans le coeur au moment de l'accident.

La chute accidentelle d'une grappe de régulation entraîne, par l'intermédiaire des automatismes de régulation de la puissance, une extraction des autres grappes du coeur du réacteur, ce qui peut provoquer une diminution du rapport d'échauffement critique sous le double effet de la déformation radiale et de la déformation axiale du flux neutronique.

Dans le cas du retrait d'une grappe de contrôle du coeur de réacteur, l'augmentation de puissance moyenne associée à la déformation radiale de flux provoque une augmentation du flux de chaleur locale au point chaud, donc une diminution du rapport d'échauffement critique.

Un autre cas est celui de la rupture d'une tuyauterie de vapeur, dans le circuit secondaire qui reçoit sa chaleur du circuit primaire contenant le fluide caloporteur précédemment mentionné, ceci par l'intermédiaire d'un générateur de vapeur. Dans ce cas, si le réacteur est en puissance, la fuite à l'air libre de la vapeur provoque un refroidissement très rapide du circuit primaire par extraction de calories dans le générateur de vapeur. Cet abaissement de la température est suivi par une extraction des grappes de contrôle suivant les ordres donnés par les automatismes de régulation pour augmenter la réactivité dans le coeur, et par conséquent la température. L'extraction des grappes de régulation provoque dans ce cas une déformation axiale de flux neutronique qui fait que l'augmentation de la réactivité le long des crayons combustibles, conduit localement, à une certaine hauteur du coeur, à une élévation du flux de chaleur local malgré le refroidissement général du fluide caloporteur du circuit primaire. Cette élévation provoque une diminution du rapport d'échauffement critique. Dans ce dernier cas un arrêt d'urgence du réacteur est provoqué par les variations d'autres paramètres.

On détermine la valeur du seuil d'alarme bas de telle sorte que la diminution du rapport d'échauffement critique qui apparait lors de ces accidents ne risque pas de remettre en cause l'intégrité du combustible.

La figure 3 montre les valeurs P et Q du rapport d'échauffement critique qui constituent les seuils d'arrêt d'urgence et d'alarme bas de ce rapport dans le procédé de pilotage connu précédemment mentionné. Ces valeurs sont constantes en fonction du pourcentage d'extraction des grappes de régulation qui peut varier de 0 à 100 %. (Lorsque ce pourcentage est 0%, les grappes sont totalement insérées dans le coeur. Lorsqu'il est 100% elles sont totalement extraites).

La valeur P = 1,68 du rapport d'échauffement critique est la valeur du seuil d'arrêt d'urgence au dessous de laquelle le réacteur est obligatoirement arrêté. Elle est déterminée en tenant compte des imprécisions sur les calculs de détermination du flux critique, auquel on ajoute une marge de sécurité pour tenir compte du fléchissement des crayons, et des imprécisions des chaines de mesure du système automatique d'arrêt d'urgence.

La valeur Q = 2,17 est choisie en ajoutant au seuil d'arrêt d'urgence la variation maximale du rapport d'échauffement susceptible d'apparaitre lors des accidents préétudiés décrits ci-dessus, puis en ajoutant une nouvelle marge correspondant à l'imprécision des chaînes de mesures autres que celles du système d'arrêt d'urgence.

Cette valeur du seuil d'alarme est ainsi déterminée indépendamment de la position des grappes de contrôle. Les opérateurs de conduite de la centrale ont des instructions précises pour maintenir le rapport d'échauffement critique au dessus de cette valeur constante. Si par exemple la chaudière nucléaire fonctionne à 100 % de sa puissance, les opérateurs doivent réduire cette puissance pour faire remonter la valeur du rapport d'échauffement critique.

C'est-à-dire que, comme précédemment mentionné, un moyen utilisé selon le procédé de pilotage connu pour ramener la valeur du rapport au dessus du seuil d'alarme bas quand celui-ci a été franchi consiste à diminuer la puissance du réacteur. La diminution de puissance est obtenue en insérant les barres de pilotage dans le coeur du réacteur. Le même moyen est utilisé selon l'invention.

Malheureusement la diminution de puissance par rapport à la puissance programmée de la centrale constitue une atteinte à la disponibilité de celle-ci et entraîne une diminution gênante de la production si elle se reproduit fréquemment.

Selon la présente invention on a trouvé que la valeur de rapport d'échauffement critique pouvait être durablement inférieure au seuil d'alarme bas constant connu sans que cela corresponde pour autant à une situation dangereuse pour le coeur du réacteur, notamment quand les grappes de régulation sont dans la partie haute du coeur. C'est pourquoi, pour éviter autant que possible la diminution de production, on a prévu selon l'invention une détermination de la valeur du seuil d'alarme bas en fonction de la position des barres de régulation de température dans le coeur du réacteur. Plus les barres sont extraites, plus la valeur du seuil d'alarme du rapport d'échauffement critique est faible. Plus précisément un dispositif automatique fait varier la valeur du seuil d'alarme bas du rapport d'échauffement critique en fonction de la position des grappes de régulation de la température du fluide primaire.

Le seuil d'alarme reste lié à la variation maximale du rapport d'échauffement critique au cours d'un des accidents préétudiés indiqués ci-dessus, mais on prend aussi en compte la position des grappes de régulation.

La variation du seuil d'alarme en fonction de la position des grappes de régulation de température est indiquée à titre d'exemple sur la courbe B de la figure 4. Selon un premier tronçon F de cette courbe, le seuil d'alarme bas du rapport d'échauffement critique reste égal à 2,17 tant que le pourcentage d'extraction est inférieur à 30 %. Au dessus de 30 % le seuil decroit linéairement avec ce pourcentage selon un deuxième tronçon G de la même courbe. Quand les grappes de régulation de température sont totalement extraites la valeur du seuil est minimale dégageant ainsi une marge de fonctionnement substantielle.

On va maintenant examiner le cas d'un accident tel que la chute d'une grappe quelconque.

L'ensemble des grappes est par exemple positionné dans le coeur de façon que la puissance du réacteur soit à 100 %. Les grappes de régulation de la température sont par exemple insérées à 70 % de la hauteur du coeur ce qui correspond à un pourcentage d'extraction de 30% et à une antiréactivité globale nettement supérieure à celle de n'importe quelle grappe individuelle. Cette dernière antiréactivité est toujours inférieure à 180 pcm (parties pour cent mille).

Quand une grappe tombe accidentellement (on suppose qu'il ne s'agit pas d'une grappe de régulation), l'ensemble des grappes de régulation de la température remonte automatiquement vers le haut du coeur de façon à maintenir la température à la valeur de consigne. De ce fait le flux de chaleur local augmente, et le rapport d'échauffement critique diminue suivant une courbe A parallèle à la courbe B.

Le rapport d'échauffement critique diminue de deux manières cumulatives. Il diminue d'une part avec une amplitude liée à la déformation axiale du flux neutronique et présentant une valeur maximale qui correspond au retrait des grappes de régulation depuis leur position initiale jusqu'au retrait total (100%). Cette valeur maximale dépend de cette position initiale. Elle s'annule si cette position initiale correspond à un pourcentage d'extraction de 100%. Dans l'exemple envisagé où cette position initiale correspond à un pourcentage d'extraction de 30% cette valeur maximale est représentée en C.

Le rapport d'échauffement critique diminue d'autre part d'une valeur constante J qui correspondant à la déformation radiale de flux due à la présence de la grappe chutée dans le coeur quelle que soit la position des autres grappes. La diminution globale du rapport d'échauffement critique est variable avec la position initiale des groupes de grappes de régulation et ne fait en aucun cas descendre ce rapport au-dessous d'une valeur de 1,30 qui correspond à la courbe E et qui constitue, dans le cas du réacteur nucléaire considéré, le seuil critique absolu à ne pas dépasser pour préserver l'intégrité du coeur.

On voit sur la figure 4 que la valeur du rapport d'échauffement critique deviendrait dans certains cas inférieure au seuil d'alarme si celui-ci avait conservé la valeur constante de 2,17 qui est celle du tronçon de gauche F de la courbe B.

La variation du seuil permet à ce rapport de ne pas passer dans ces cas au dessous de ce seuil. Elle évite donc à l'opérateur de devoir diminuer sans nécessité la puissance du réacteur pour respecter les règles de conduite fixées.

Dans tous les cas la diminution du rapport d'échauffement critique ne comporte pas de risques pour l'intégrité du coeur tant que ce rapport reste supérieur au seuil d'alarme ainsi déterminé.

La référence D désigne une marge de sécurité supplémentaire qui a pu être maintenue sur ce rapport dans le cas du réacteur considéré.

**Revendications**

1. Procédé de pilotage du réacteur d'une centrale nucléaire à l'aide de plusieurs familles de barres de contrôle, un tel réacteur comportant

   - un coeur contenant des éléments combustibles réactifs pour alimenter une réaction de fission nucléaire qui crée un flux neutronique dans le volume de ce coeur, qui est elle-même provoquée dans chaque zone de ce volume par le flux neutronique régnant dans cette zone, et qui dégage sous forme thermique une puissance nucléaire variant avec ce flux,

   - un circuit de fluide caloporteur dont une branche passe par ce coeur pour évacuer cette puissance et permettre son utilisation dans une charge variable à l'extérieur du réacteur,

   - des moyens de mesure notamment de températures de ce fluide pour fournir d'une part un rapport d'échauffement critique représentant le rapport d'un flux de chaleur critique prédéterminé qui serait gravement dommageable en quelque point du coeur qu'il apparaisse, à un flux de chaleur local actuel en un point chaud où ce flux est maximal, et pour fournir d'autre part une température moyenne de fluide caloporteur qui doit être voisine d'une valeur normale pour permettre un fonctionnement optimal de la centrale,

   - et des barres de contrôle munies de moyens de déplacement et de moyens de commande pour insérer et extraire longitudinalement ces barres dans des zones correspondantes de ce coeur et pour commander ainsi leurs positions, la position d'une barre étant définie par son pourcentage d'extraction, chacune de ces barres comportant un matériau absorbeur de neutrons réparti sur sa longueur et lui conférant une antiréactivité qui diminue ledit flux neutronique et ladite puissance nucléaire dans la zone correspondante du coeur sur la profondeur sur laquelle la barre est insérée, de manière que le déplacement de ces barres permette de faire varier la puissance nucléaire du coeur au prix de distorsions qui apparaissent dans la répartition du flux neutronique et qui s'accompagnent d'une usure supplémentaire du coeur, une famille de ces barres de contrôle étant constituée de barres de pilotage qui peuvent être déplacées lors d'opérations de pilotage normal sur une grande profondeur pour faire suivre à la puissance nucléaire des variations dites "importantes" qui affectent ladite charge extérieure, une autre famille de barres de contrôle étant constituée par des barres de régulation, lesdits moyens de commande de ces barres recevant ladite température moyenne de fluide caloporteur et diminuant ou augmentant le pourcentage d'extraction de ces barres de régulation selon que cette température est supérieure ou inférieure à sadite valeur normale, respectivement, de manière à réaliser une boucle de régulation qui maintient automatiquement cette température moyenne au voisinage de cette valeur normale en faisant suivre à la puissance nucléaire des variations dites "faibles" qui affectent ladite charge extérieure, qui sont plus faibles et plus fréquentes que lesdites variations importantes et qui feraient varier cette température si la puissance nucléaire était constante, ces moyens de commande limitant le déplacement de ces barres de régulation en service normal à l'intérieur d'un domaine de régulation qui est défini entre deux pourcentages d'extraction élevés, de manière à limiter l'usure du coeur en limitant l'amplitude des distorsions que les déplacements de ces barres imposent fréquemment au flux neutronique,

   - ce procédé comportant non seulement un déplacement des barres de pilotage lors des dites opérations de pilotage normal pour faire suivre par la puissance nucléaire lesdites variations importantes de la charge extérieure, mais aussi une insertion éventuellement supplémentaire de ces barres lors d'une opération de diminution de puissance sur alarme qui est effectuée dès que ledit rapport d'échauffement critique descend au dessous d'un seuil d'alarme bas de manière à faire remonter ce rapport au moins jusqu'à ce seuil,

   - ce procédé étant caractérisé par le fait que ledit seuil d'alarme bas du rapport d'échauffement critique est une fonction généralement décroissante du pourcentage d'extraction desdites barres de régulation.

2. Procédé selon la revendication 1 caractérisé par le fait que ladite fonction est sensiblement linéaire et décroissante au moins sur une partie dudit domaine de régulation.

3. Procédé selon la revendication 2, caractérisé par le fait que ledit seuil d'alarme bas (B) est sensiblement constant (F) sur une partie inférieure dudit domaine de régulation et décroît sensiblement linéairement (G) sur une partie supérieure de ce domaine.

4. Dispositif de pilotage mettant en oeuvre le procédé selon le préambule de la revendication 1, ce dispositif étant caractérisé par le fait qu'il comporte un circuit de détermination automatique du seuil d'alarme bas du rapport d'échauffement critique, ce circuit recevant l'information constituée par le pourcentage d'extraction desdites barres de régulation et traitant cette information pour fournir une valeur de ce seuil d'alarme qui est une fonction prédéterminée (B) généralement décroissante de ce pourcentage.

**Claims**

1. A method of controlling the reactor of a nuclear power station by means of a plurality of families of control rods, such a reactor comprising:
   - a core containing reactive fuel elements for fuelling a nuclear fission reaction which creates a neutron flux in the volume of this core, said reaction itself being engendered in each zone of said volume by the neutron flux existing in said zone, and generating nuclear power in the form of heat which varies with said flux,
   - a coolant circuit having one branch passing through said core to remove said power and to enable it to be used in a variable load outside the reactor;
   - measuring means for measuring, in particular, the temperatures of said coolant in order to provide on the one hand a critical heating ratio representative of the ratio of a predetermined critical heat flux which would be severely damaging at whatever point it occurs in the core, to a real local heat flux at a hot point where said flux is at a maximum, and on the other hand to provide an average temperature of the coolant which should be close to a normal value in order to enable the station to operate optimally:
   - and control rods provided with displacement means and with control means for inserting and extracting said rods longitudinally in corresponding zones of the core thereby controlling the positions of said rods, the position of a rod being defined by its extraction percentage, each of said rods including a neutron-absorbing material distributed along its length and conferring negative reactivity thereto which diminishes said neutron flux and said nuclear power in the corresponding zone of the core over the depth to which the rod is inserted in such a manner as to enable displacement of said rods to vary the nuclear power of the core at the expense of distorsions which appear in the distribution of the neutron flux and which give rise to additional wear of the core, one family of these control rods being constituted by pilot control rods capable of being displaced during normal control operations over a great depth in order to cause the nuclear power to be followed by so-called "important" variations which affect said external load, another family of the control rods being constituted by regulator rods, said rod control means receiving said average temperature of the coolant and reducing or increasing the extraction percentage of these regulator rods depending on whether said temperature is respectively greater than or less than its normal value, thereby constituting a regulation loop which automatically maintains said average temperature in the vicinity of said normal value by causing the nuclear power to be followed by so-called "weak" variations which affect said external load and which are weaker and more frequent than said important variations and which would cause said temperature to vary if the nuclear power were constant, said control means limiting the displacement of said regulation rods in normal operation to within a regulation range which is defined between two high extraction percentages so as to limit wear on the core by limiting the amplitude of the distorsions which such rod displacements frequently impose on the neutron flux:
   - said method comprising not only a displacement of the pilot control rods during said normal control operations in order to cause the nuclear power to be followed by said important variations in the external load, but also a possible additional insertion of said rods during an operation to reduce power on an alarm which occurs as soon as said critical heating ratio falls below a low alarm threshold such as to raise said ratio at least as far as said threshold,

- said method being characterized in that said low alarm threshold of the critical heating ratio is a generally decreasing function (B) of the extraction percentage of said regulation rods.

2. A method according to claim 1, characterized in that said function is linear and decreasing, at least over a portion of said regulation range.

3. A method according to claim 2, characterized in that said low alarm threshold (B) is substantially constant (F) over a lower portion of said regulation range, and falls off substantially linearly (G) over an upper portion of said range.

4. A device for performing the method according to the preamble part of claim 1, said device being characterized in that it includes a circuit for automatically determining the low alarm threshold of the critical heating ratio, said circuit receiving data constituted by the extraction percentage of said regulation rods, and providing a value for said alarm threshold which is a generally decreasing predetermined function (B) of said percentage.

**Patentansprüche**

1. Vorrichtung zur Steuerung des Reaktors eines Kernkraftwerks mit Hilfe mehrerer Familien von Kontrollstäben, wobei ein solcher Reaktor aufweist

- einen Kern, der reaktive Brennelemente aufweist, um eine Kernspaltungsreaktion zu unterhalten, die einen Neutronenfluß im Volumen dieses Kerns erzeugt, wobei der Neutronenfluß in jedem Bereich dieses Volumens durch den in diesem Bereich herrschenden Neutronenfluß bewirkt wird und eine mit diesem Fluß variierende nukleare Leistung in Form von Wärme ausgibt,

- einen Kühlmittelkreis, von dem ein Zweig durch diesen Kern verläuft, um diese nukleare Leistung abzuführen und ihre Verwendung in einer variablen Last außerhalb des Reaktors zu ermöglichen,

- Mittel zur Messung insbesondere von Temperaturen dieses Kühlmittels, um einerseits ein kritisches Erhitzungsverhältnis zu liefern, das das Verhältnis eines vorbestimmten kritischen Wärmeflusses, der schwerwiegende Schäden hervorrufen würde, gleich an welchem Punkt des Kerns er auftreten würde, zu einem aktuellen lokalen Wärmefluß an einem Heißpunkt darstellt, wo dieser Fluß maximal ist, und um andererseits eine mittlere Temperatur des Wärmeträgerfluids zu liefern, die nahe einem Normalwert liegen soll, um einen optimalen Betrieb des Kraftwerks zu ermöglichen,

- und Kontrollstäbe, die mit Verschiebemitteln und Steuermitteln versehen sind, um diese Stäbe in entsprechende Bereiche des Kerns in Längsrichtung einzuführen und herauszuziehen, und um so ihre Positionen zu steuern, wobei die Position eines Stabes durch seinen prozentualen Extraktionsgrad bestimmt ist und jeder dieser Stäbe ein Neutronenabsorptionsmaterial aufweist, das über seine Länge verteilt ist und ihm eine negative Reaktivität verleiht, die diesen Neutronenfluß und die nukleare Leistung in dem entsprechenden Bereich des Kerns über seine Tiefe verringert, über die der Stab eingeführt ist, so daß das Verschieben dieser Stäbe es ermöglicht, die nukleare Leistung des Kerns unter Inkaufnahme von Verzerrungen zu verringern, die in der Verteilung des Neutronenflusses auftreten und eine zusätzliche Abnutzung des Kerns nach sich ziehen, wobei eine Familie dieser Kontrollstäbe aus Steuerstäben besteht, die bei normalem Steuerbetrieb über eine große Tiefe bewegt werden können, um die nukleare Leistung sogenannten "bedeutenden" Variationen zu unterwerfen, die die äußere Last beeinflussen, während eine andere Familie von Kontrollstäben aus Regelstäben besteht, wobei die Steuermittel dieser Stäbe die mittlere Temperatur des Wärmeträgerfluids zugeführt erhalten und den Extraktionsgrad dieser Regelstäbe verringern oder erhöhen, je nachdem, ob diese Temperatur höher bzw. niedriger als ihr Normal-Wert ist, so daß eine Regelschleife entsteht, die automatisch diese mittlere Temperatur in der Nähe dieses Normalwerts hält, indem sie die nukleare Leistung sogenannten "schwachen" Variationen unterwirft, die die äußere Last beeinflussen und die schwächer und häufiger sind als die bedeutenden Variationen und die diese Temperatur ändern würden, wenn die nukleare Leistung konstant wäre, wobei diese Steuermittel die Verschiebung dieser Regelstäbe im Normalbetrieb innerhalb eines Regelbereichs begrenzen, der zwischen zwei hohen Extraktionsgraden definiert ist, um die Abnutzung des Kerns zu begrenzen, indem die Amplitude der Verzerrungen begrenzt wird, die die Verschiebungen dieser Stäbe oft dem Neutronenfluß aufprägen,

- wobei dieses Verfahren nicht nur eine Verschiebung der Steuerstäbe während des Betriebs bei normaler Steuerung, um an diese bedeutenden Variationen der äußeren Last die nukleare Leistung anzupassen, sondern auch eine eventuelle zusätzliche Einführung dieser Stäbe bei einem Vorgang der Leistungsverringerung bei einem Alarm aufweist, der ausgelöst wird, sobald das kritische Erhitzungsverhältnis unter eine niedrige Alarmschwelle fällt, um dieses Verhältnis mindestens bis auf diese Schwelle ansteigen zu lassen,

wobei dieses Verfahren dadurch gekennzeichnet ist, daß diese niedrige Alarmschwelle des kritischen Erhitzungsverhältnisses eine allgemein abnehmende Funktion (B) des Extraktionsgrads dieser Regelstäbe ist.

2. Verfahren nach Anspruch 1, dadurch gekennzeichnet, daß diese Funktion über mindestens einen Teil des Regelbereichs im wesentlichen linear und abnehmend ist.

3. Verfahren nach Anspruch 2, dadurch gekennzeichnet, daß die niedrige Alarmschwelle (B) über einen unteren Teil des Regelbereichs im wesentlichen konstant (F) ist und im wesentlichen linear (G) über einen oberen Teil dieses Bereichs abnimmt.

4. Steuervorrichtung, die das Verfahren gemäß dem Oberbegriff des Anspruchs 1 verwendet, dadurch gekennzeichnet, daß sie einen Kreis zur automatischen Bestimmung der niedrigen Alarmschwelle des kritischen Erhitzungsverhältnisses aufweist, wobei dieser Kreis die aus dem Extraktionsgrad der Regelstäbe bestehende Information erhält und diese Information bearbeitet, um einen Wert dieser Alarmschwelle zu liefern, der eine im allgemeinen abnehmende vorbestimmte Funktion (B) dieses Grades ist.

# FIG. 1

# FIG. 2

# FIG. 3

# FIG. 4